Europäisches Patentamt

European Patent Office

Office européen des brevets

(11) Publication number: **0 093 937**
A1

# EUROPEAN PATENT APPLICATION

(21) Application number: 83104042.3

(22) Date of filing: 25.04.83

(51) Int. Cl.³: **F 16 D 3/84**

(30) Priority: 10.05.82 US 376766

(43) Date of publication of application: 16.11.83
Bulletin 83/46

(84) Designated Contracting States: DE FR GB IT

(71) Applicant: Grove, Clinton E., Elbow Lake Minnesota (US)
Applicant: Golberg, Jeffrey O., Glenwood Minnesota (US)

(72) Inventor: Grove, Clinton E., Elbow Lake Minnesota (US)
Inventor: Golberg, Jeffrey O., Glenwood Minnesota (US)

(74) Representative: Strehl, Peter et al, Strehl, Schübel-Hopf, Schulz Patentanwälte
Widenmayerstrasse 17 Postfach 22 03 45,
D-8000 München 22 (DE)

(54) Covering for rotating flexible axle joints.

(57) The invention involves a boot for enclosing a flexible rotating joint. The boot body (100) has a generally tubular shape with end openings (104, 109) and at least one sealable joint (130, 135) running from one end opening to the other. The sealable joint is formed by two edges. One has a U-shaped channel (133, 137) on it into which the other edge fits, resulting in a boot with a substantially annular cross-section. The boot is made from a thermoplastic ester-based polyurethane elastomer. The sealable joint (130, 135) is sealed with a solvent welding process. Adapter rings placed within the end openings (104, 109) permit a single boot size to be fitted to several different axle (70) and housing (60) sizes and shapes.

COVERING FOR ROTATING FLEXIBLE AXLE JOINTS

This invention relates to a covering or boot for enclosing rotating flexible axle joints and, more particularly, to a covering or boot for universal or constant velocity joints of drive shafts on various types of motor vehicles.

Flexible rotating joints are used in a variety of applications, including motor vehicles. Such joints include the conventional cross and bearing type universal joints, as well as constant velocity joints of more recent ball-and-socket or tripode-principle design, with or without a "plunging" feature to allow elongation as well as flexing. Such joints have become widely used in front-wheel drive vehicles, which are being sold in increasingly greater numbers.

Many flexible rotating joints are enclosed in protective coverings or boots made of synthetic rubber, which are intended to retain lubrication around the joint and to prevent outside contaminants from reaching the working surfaces of the joints. Because such protection of the joint guards against premature joint failure, coverings or boots are normally replaced whenever inspection reveals a hole, a split or wear of any kind. Replacement can often prevent a later, more costly repair.

In the most commonly sold and serviced motor vehicles, particularly in the various new front-wheel drive cars, a one-piece boot or covering which is conical or tubular in shape is used to cover flexible, rotating joints. See, e.g. U.S. Patent No. 4,224,808. While removal of an old boot does not require disassembly of the joint, because it can simply be torn or cut, installation of a new one-piece boot requires that the axle shaft be threaded through the boot. This means that the joint or axle must be partially disassembled and separated so that the threading operation can occur. The result is high labor costs for an otherwise relatively simple task and the possibility of disturbing the somewhat complex structure of such joints and their accompanying axle assemblies. To avoid these problems, a boot is needed which can be installed quickly and easily, without disassembly of joint or axle.

Although at least one boot formed from a single piece of material which can be wrapped and fastened around a joint to encircle and enclose it without disassembling it has been known, e.g., U.S. Patent No. 2,210,847, on applicants' information and belief, no such boot or covering with a seam or split to permit installation without disassembly is currently in use. Accordingly, the important and increasingly common operation of replacing a damaged boot is leading to increased repair costs for vehicle having flexible, rotating axles.

Conventional boots or joint coverings also suffer from another drawback. Because the outer edges of both ends of the boot must fit tightly against the shaft or housing on either side of the joint, boots are usually made to fit only one, specific axle size or shape. Accordingly, a repair shop must keep a large inventory of boots of various sizes and shapes, and the manufacturer of boots must be prepared to make and distribute an inventory which includes a large number of boots which differ only by size or shape.

Most conventionally available boots are made of synthetic rubber, although boots made of leather, fabric, thin metal, synthetic thermoplastic, polypropylene and other elastomers have all been proposed. See, e.g., U.S. Patent Nos. 2,227,687; 2,411,874; 3,660,213; 4,107,952; 4,222,805. Although a split or seamed boot could be made out of such materials, there may be some difficulty in rapidly forming a strong seal at the split or seam. This seal is quite important for protecting the joint and is subject to frequent flexing and stressing. Still other materials, which may be more easily sealed, may not have the other qualities necessary for a boot, namely resistance to extremes of heat and cold, resistance to lubricants and other chemicals commonly found in the vehicle and road environment and strength to withstand frequent flexing.

The present invention involves a boot for sealingly enclosing a flexible, rotating joint which is designed to overcome the above-identified problems of the prior art. The boot comprises a boot body of flexible, resilient material which, prior to its affixation to enclose the joint, consists of a generally tubular bellows segment having first and second end openings. Each of these end openings encircles a shaft or housing which is part of the joint. The bood body also has at least one sealable joint running from one end opening to the other and has an external clamp groove encircling each end opening. The boot further includes clamping means cooperating with the external clamp grooves to encircle each of the end openings and compress the interior surface of each of the end openings radially inward toward the shaft or housing encircled by each end opening. The sealable joint in the boot consists of a first edge having substantially the same thickness as the remainder of the boot body and a second edge on which a generally U-shaped channel has been formed. The U-shaped channel is open toward the first edge of the joint. The channel is aligned on the second edge so that upon joining, the first and second edges are aligned with each other to form a tubular bellows with a substantially annular cross section of uniform width, except for the legs of the U-shaped channel.

It is a principal objective of the invention, to provide a boot for covering a flexible, rotating axle joint which can be placed around the joint without disassembling it, which is made of a material which can withstand the temperature extremes and the lubricants and other chemicals in a vehicle and road environment, which can be adapted to fit several sizes and shapes of axle shafts, which

0093937

can be easily manufactured from moldable or plastic
materials, and which can rotate with the axle it
encloses without significant rotational distortion of
its annular cross-section.

In the drawings,

Figure 1 is a longitudinal cross-sectional view of
a constant velocity joint assembly with a boot according
to the present invention installed around it.

Figure 2 is a transverse cross-sectional view of
the boot of the present invention.

Figure 3 is a cross-sectional view of one end of the
boot of the present invention as used with an internal
diameter adapter ring.

Figures 4A-4E are detail drawings showing the cross-
sectional configurations of various internal diameter
adapter rings for the end openings of the boot of the
present invention.

Figures 5A-5B are detail drawings showing a grease
fitting feature of the invention.

Figure 6 is a detail drawing showing the cross-
sectional configuration of a length adapter ring.

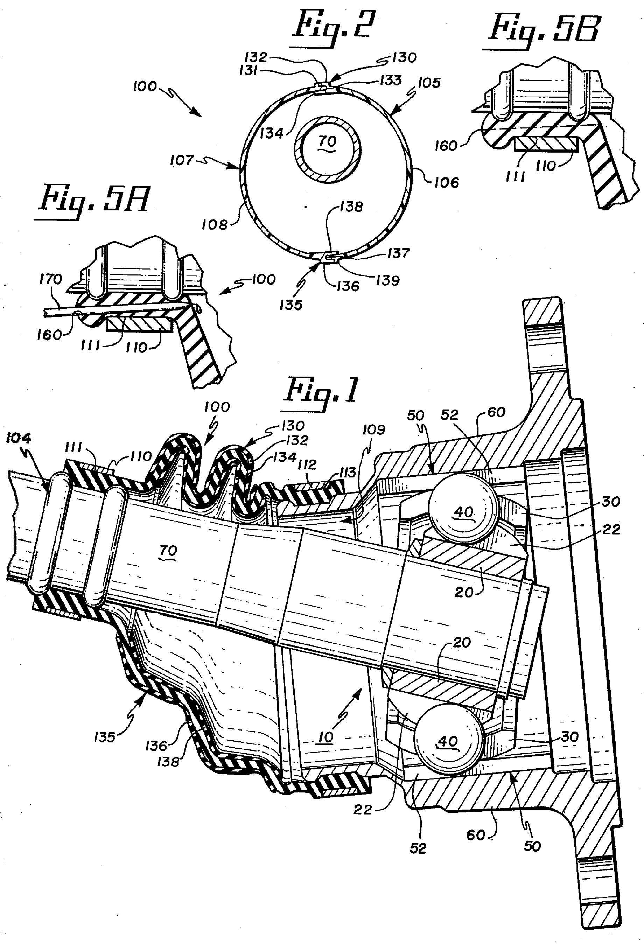

As best seen in Figure 1, the present invention
involves a boot or covering 100 which forms part of the
enclosure for a rotatable, flexible joint, such as the
constant velocity joint 10 shown. Such a constant velocity
joint 10 is usually part of a driving axle assembly for
a motor vehicle, however, they may also be found in other
applications. The boot 100 of the present invention may
be adapted to a wide variety of motor vehicle applications
and also may be used with other mechanical structures
subject to elongation and bending where protection against
loss of lubricants and entrance of foreign material is
desired.

The various parts forming the constant velocity joint
10 can best be seen in Figure 1, which shows a particular
type of constant velocity joint called a ball-type fixed joint. The name is derived from the plurality of drive ball bearings 40 (usually six), which are contained in a cage 30. Inside the cage 30, the drive ball bearings 50 rest in the grooves 22 of an inner race or drive member 20. Surrounding the cage 30 and the ball bearings 40 is an outer drive member in the form of a fixed joint housing 60, which includes as part its interior an outer race 50 having ball-bearing grooves 52, radially paired with the grooves 22 of the inner race 20. The inner race 20 is spline-connected to the axle shaft 70. The outer drive member or housing 60 is connected to the axle or hub assembly on the side of the joint 10 opposite the axle shaft 70.

This type of joint operates in a well-known manner to provide constant velocity operation when rotated under angle. Briefly, the cage 30 pivots on the inner drive member 20 about centers equally offset from the universal joint center when the joint 10 is bent at an angle to maintain the drive ball-bearings 40 in the half-angle or constant velocity plane for constant velocity operation. Within the degree of motion afforded by the inner race 20 and outer race 50, the shaft 70 may assume various acute angles to the axis of rotation of the housing 60.

Although in the following, the structure and operation of the invention will be described in the context of a fixed, ball-type constant velocity joint as shown in Figure 1, it will be apparent that the invention is equally applicable to a stroking or plunging-type ball joint or to a tripode-type constant velocity joint of either the fixed or plunging type.

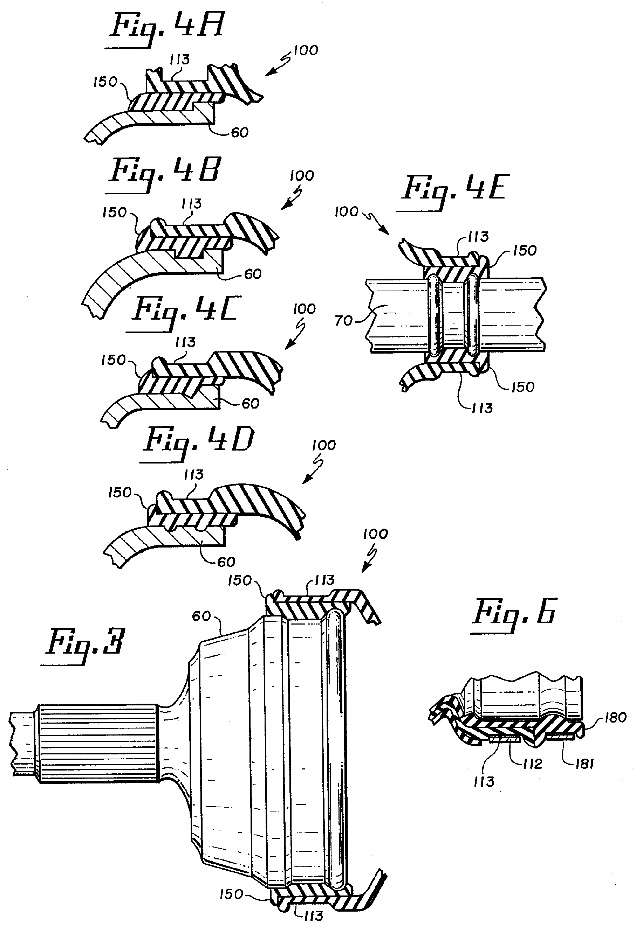

Referring now to Figures 1 and 2, it can be seen that the invention comprises a bellows-type boot or covering 100 which is roughly tubular in shape and has two end openings 104, 109. In the embodiment shown in Figure 1, the end opening 104 is smaller than the end opening 109, making the boot 100 somewhat conical, but this shape would not always be used and is not essential to the invention.

As one of the objects of the invention is to permit the boot 100 to be installed without disassembling the constant velocity joint 10 or any other portion of the axle assembly, prior to installation the boot 100 has at least one open seam or split which runs along the side of the boot 100 from one end opening to the other. As best seen in Figure 2, the preferred embodiment of the invention includes two seams, 130, 135 which are located symmetrically on opposite sides of the boot 100. The seams 130, 135 are formed by constructing each boot 100 from two identical boot-halves 105, 107. The connection between the two halves 105, 107 is made by means of channels 133, 137 which are formed along one edge of each boot-half 105, 107.

The detailed construction of the connection seam 130 is best shown in Figure 2. From that figure, it can be seen that the sides or legs 132, 134 of the channel 133 are relatively thinner than the wall 106 of the boot half 105 of which they are a part and that the inner leg 134 is slightly longer than the outer leg 132. The space between the legs 132, 134 is dimensioned so as to snugly receive the edge of the wall 108 of the opposite boot-half 107. The connection between the edge of the wall 107 and the channel 130 is by an adhesive/solvent method, described in greater detail below. The seam 135 is constructed in an identical manner.

To facilitate easy joining of the two convoluted boot-halves 105, 107 the edge of each wall 106, 108 received in each channel 133, 137 is rounded or chamfered so that it slips more easily into place. Alignment of the edges with the channels 133, 137 during insertion of the convoluted edges is aided and guided by the longer inner legs 134, 138. To serve as an indicator that the edges are fully inserted into the channels 133, 137 and to provide a surface which clips (not shown) may grasp for holding the seams 130, 135 together during curing of the adhesive/solvent connection, ribs 131 and 139 are provided along the exterior sides of walls 106, 108 near the inserted eges.

It should be noted that the mass of the legs 132, 134 and 136, 138 and ribs 131, 139 is relatively small in comparison to the walls 106, 108, due to their thinness. In addition, it should be noted that the symmetrical placement of the channels 133, 137 on the edges of the boot-halves 105, 107 permits the walls 106, 108 of the boot 100 to extend in a circle with almost no assymetries or discontinuities except for the legs 132, 134, 136, 138 and ribs 131, 139. This configuration aids in providing proper balance and low distortion of the cross-section of the boot 100 when it rotates rapidly as the constant velocity joint 10 rotates.

As best seen in Figure 1, the boot 100 is attached to a constant velocity joint 10 by a first flat ring 110 of conventional design encircling the smaller end opening 104 and by a second such clamp 112 encircling the larger end opening 109. The clamps 110, 112 may be of metal or other suitable material and should be adjustable so they can be tightened firmly against the exterior of each end opening. To facilitate seating and permanent stability of the clamps 110, 112, each of the end openings 104, 109 has an external clamp groove 111, 113 encircling it in which the ring clamp 110, 112 sits.

Turning now to Figure 3, an additional feature of the invention,which permits the boot 100 to be economically adapted to a wide variety of constant velocity axle assemblies can be seen. As mentioned previously, constant velocity joints are used in a variety of motor vehicles and, with the increase in sales of front wheel drive vehicles, increase in this variety is expected. Several manufacturers and several different sizes of constant velicity joints are currently in use. These may differ not only in the size and length of the axle shaft 70 and housing 60 to which a boot 100 must be fitted, but also in the shape of the surface to be contacted by the interior of the end openings 104, 109 of the boot 100. Clearly, it is important that a tight, leak-proof seal be obtained between the boot 100 and the axle shaft or housing. To adapt the invention to the various axle shaft and housing types and sizes, an internal diameter adapter ring 150 is used. Like the boot 100, it is formed with at least one seam or split, so that it can be placed around the joint 10 without disassembly. No particular shape is required for this seam, except that the resulting adapter ring 150 should be of uniform cross-sectional shape and thickness. The interior surface of the adapter ring 150 is configured to cooperate with whatever grooves or surface features are present on the axle shaft 70 or housing 60. The exterior surface of the adapter ring 150 is configured to mate precisely with the interior surface of the end openings 104, 109 of the boot 100, with the thickness of the adapter ring 150 for a given application being chosen so that no crimping or stretching of an end opening is necessary. The adapter ring 150 shown in Figure 3 is just one of many configurations which can be made, as can be seen in Figures 4A-4E which show other configurations for the adapter ring 150, suitable for various different axle or housing configurations.

As best seen in Figure 6, a length adapter ring 180 may be used to extend a given boot size to fit a longer joint 10 without stretching out the convolutions of the bellows. In this case, the length adapter ring 180 would fit under the external clamp groove 113 of the boot 100 to be extended. For greater security, a second clamp 181 is used to hold the adapter ring 180, in addition to the clamp 112 which would be present in clamp groove 113.

Both the boot 100 and the adapter rings 150, 180 are, in the preferred embodiment, made of a thermoplastic ester-based polyurethane elastomer, a material which is resilient and capable of withstanding repeated flexing at high and low temperatures and is resistant to most chemicals encountered in a vehicle or in a road environment, as well as being waterproof. Such a material is available commercially from a variety of sources. The product designated "PS 79" sold by K.J. Quinn & Co., Inc. of Malden, Massachusetts is one example of a suitable commercially-available material. This material is injection molded by conventional techniques to form the boot-halves and adapter rings shown in the accompanying figures. When the boot halves are identical as shown in Figure 2, only one mold is necessary to produce both halves. This makes the tooling more economical.

The seams 130, 135 of the boot halves may be joined by several related methods when the above-discussed material is used. Each involves the use of a solvent to dissolve a portion of the elastomer at the seam so that a "weld" consisting of a region of the elastomer itself is formed. This makes the boot resemble in strength a continuous boot structure manufactured without any seam. One suitable bonding method is to use a liquid solvent such as dimethyl-formamide (DMF). This liquid is applied to all surfaces to be joined. The surfaces are then brought together and clamped for a few hours until the bond is secure. A second method is to use a plastic adhesive dissolved in a solvent such as DMF. The concentration of the adhesive in the solvent can vary over a range of from one to fifty percent by weight, depending on the desired consistency of the mixture, drying time, bonding time, and other factors. The solvent-adhesive mixture is used in much the same way as the pure solvent. A third method which can be used is a variation of the second. With this method an activator such as methacrylate is added to the previously-described adhesive-solvent mixture. The activator will work when used in amounts varying from trace amounts up to about five percent by weight, again depending on desired drying time, bonding time and other factors. The same bonding procedure is used as with the other methods.

An additional feature of the invention can be seen in Figures 5A and 5B, which show a grease fitting 160 used to fill the boot 100 with lubricant. The grease fitting 160 is a narrow slit or passage large enough to accomodate a needle-nose grease gun 170. The slit for the grease fitting 160 begins near the outer edge of a clamp groove 111 and extends toward the interior surface of the boot 100 to end at a point inside the clamp groove 111. As can be seen in Figures 5A and 5B, the needle-nose grease gun 170 can be used to force open the grease fitting 160 to permit lubricant to be injected into the interior of the boot 100. For convenience in permitting air to escape as lubricant is inserted, each end of the boot 100 can include such a grease fitting 160, with only one being used for filling. The slit of the grease fitting 160 is formed by removing little or no material so that when the clamp ring 110 is tightened down in the groove 111, the slit is completely closed to make a leakproof seal. If desired, a slight bump (not shown) could be formed in the clamp groove 111 above the grease fitting 160 so that extra pressure from the clamp ring 110 would be focused on the grease fitting 160 to more tightly close it.

A further feature of the preferred embodiment can be seen in Figure 1. As shown in that figure, the thickness of the legs 132. 134 of the channel 130 and, similarly, the thickness of the legs 136, 138 of the channel 135 varies. In particular, the legs are thinner in the "valleys" of the bellows (i.e., those portions of the convolutions which ordinarily are closer to the shaft 70) than at the "peaks" or the side of the "peaks". This enhances the durability of the boot 100 against gradual deterioration through frequent flexing of the "valley" areas. The thinner areas are achieved by tapering the thickness of the legs near the bottom of the "valleys" so that the points of minimum thickness are at the "valley" bottoms.

The invention is used in the following manner. After the old boot is removed from the joint 10, any contaminated lubricant should also be removed and the joint 10 checked for damage. Damaged joint parts should be replaced; otherwise, there is no need to disassemble the joint 10. A matched pair of boot halves 105, 107 and any necessary adapter rings 150, 180 should be selected to fit the axle shaft 70 and housing 60 of the joint 10 to be repaired. No lubricant or other foreign material should be permitted to touch the surfaces to be bonded together. The welding solvent (or solvent/adhesive or solvent/adhesive/activator) solution should be applied to the mating surfaces just before the boot halves 105, 107 are placed around the axle shaft 70 and housing 60 with the mating surfaces pressed together. The bellows configuration and the channel- and mating-edge construction make a self-aligning joint when each edge is inserted into a channel. Small pinch clamps (not shown) pressing the ribs 131, 139 against the corresponding outer channel legs 132, 136, respectively, may also be used to aid sealing.

If an adapter ring 150 or 180 is used, it may be placed in position around the axle shaft 70 or housing 60 before the boot halves 105, 107 are used, joining its seam with solvent, if desired. The contact surfaces between the interior of the boot 100 under the clamp grooves 111, 113 and the exterior of the associated adapter rings may also be bonded with solvent, if desired. The pieces to be bonded should be held in place against each other for about thirty seconds. The clamp rings 110, 112 should then be installed in the clamp grooves 111, 113 provided. The rings 110, 112 should be tightened until a tight seal exists between the boot 100 and the housing 60 or axle shaft 70 and/or between the boot and any adapter rings used. The clamp rings 110, 112 will hold the adapter rings in place even if no solvent has been used on them. The resilience of the elastomer helps keep the seal tight against the axle shaft 70 or housing 60.

If the particular boot model used has a fitting for injecting lubricant, lubricant may be appealed to the joint 10 after the boot surfaces are bonded. The boot should not be over-filled with lubricant, and it may be necessary to slightly loosen one of the clamp rings 110, 112 to allow air to escape as lubricant is added.

In summary, it will be seen from the above discussion that the present invention involves an improved boot for rotatable flexible joints which permits boot replacement without disassembling the joint, leading to significant labor savings. The boot has at least one split or seam which permits it to be placed around the joint. A solvent welding process is then used to seal the seam and, with the aid of clamp rings, to provide a sealed enclosure around the joint. The polyurethane elastomer from which the boot is made not only is particularly suited to producing a strong, welded seam but also has the flexibility, resilience and resistance to lubricants and other chemicals required for motor vehicle or other harsh environments. The boot can be manufactured by standard injection molding processes. To avoid having to mold a wide variety of boots in various sizes and shapes, adapter rings of different sizes are made for use with the boot. These adapt the boot to the size and shape of the particular shaft or housing portion of the joint to which the boot is clamped. In the preferred embodiment, the boot is made in two identical boot halves which are jointed at seams located on opposite sides of the boot for better balance under rotation.

It will be obvious to one skilled in the art that a number of modifications can be made to the specific embodiments described herein without essentially changing the invention. For example, the ends of the boot may be fastened by means other than the clamp rings shown, and the bellows configuration illustrated may be replaced by other boot body configurations which permit a boot to be flexed or extended as required by joint movement. Accordingly, while the preferred embodiment of the invention has been described and illustrated, it is understood that the invention is not limited to the precise construction herein disclosed, and the right is reserved to all changes and modifications coming within the scope of the invention as defined in the appended claims.

0093937

CLAIMS:

Having thus described the invention, what is claimed as new and desired to be secured by Letters Patent, is:

1. A boot for sealingly enclosing a flexible rotating joint comprising:

a boot body (100) of flexible, resilient material, said boot body, prior to its affixation to enclose the joint, consisting of a generally tubular bellows segment having first and second end openings (104, 109) and at least one sealable joint (130, 135) running from one end opening to the other, said boot body further having an external clamp groove (111, 113) encircling each end opening (104, 109),

clamping means (110, 112) cooperating with each of said external clamp grooves (111, 113) to encircle each said end opening (104, 109) and compress the interior surface of each end opening radially inward toward the portion (60, 70) of the joint encircled by each said end opening; and

wherein said at least one sealable joint (130, 135) consists of:

a first edge, and

a second edge cooperating with said first edge, said second edge having a generally U-shaped channel (133, 137) formed thereon, said U-shaped channel having sufficient space between its legs to receive said first edge, and said U-shaped channel (133, 137) further being aligned on said second edge so that upon joining, said first and second edges are substantially aligned with each other to form a tubular bellows having a substantially annular cross-section.

2. The boot as recited in claim 1, wherein the flexible resilient material is a thermoplastic ester-based polyurethane elastomer.

3. The boot as recited in claim 2, wherein the thermoplastic ester-based polyurethane elastomer is weldable with a dimethyl-formamide solvent.

4. The boot as recited in claim 3, wherein the dimethyl-formamide solvent further comprises a methacrylate activator.

5. The boot as recited in any of claims 1 to 4, wherein the clamping means comprises a ring clamp (110, 112).

6. The boot as recited in any of claims 1 to 5, wherein the boot body (100) comprises two substantially identical boot halves (105, 107) joined with each other at two of said sealable joints (130, 135) running from one end opening (104) to the other (109), said sealable joints being located on opposite sides of the boot, substantially 180° apart.

7. The boot as recited in any of claims 1 to 6, further comprising at least one adapter ring (150, 180) cooperating with the interior surface of an end opening (104, 109) and encircling a portion (60, 70) of the joint beneath one of said clamp grooves (111, 113).

8. The boot as recited in any of claims 1 to 7, further comprising at least one grease fitting passage (160) leading from the exterior of the boot adjacent an outer edge of one end opening (104), beneath the clamp groove (111) adjacent the end opening, to the interior of the boot.

9. The boot as recited in claim 8, further comprising an additional grease fitting passage leading from the exterior of the boot adjacent an outer edge of the other end opening (109).

10. The boot as recited in any of claims 1 to 9, wherein the legs (132, 134, 136, 138) of the U-shaped channels (133, 137) are tapered such that they are thinner in those areas closest to rotational axis of the joint.

**Fig.2**

132
131
130
133 105
100
134 70
107
106
138
108
137
135 136 139

**Fig.5B**

160
111 110

**Fig.5A**

170
100
160
111 110

**Fig.1**

104
111 110
100
130
132
134 112
113
109
50 52 60
70
40
30
22
20
20
40
30
135
136
138
10
22
52
60
50

2/2    0093937

Fig. 4A

Fig. 4B

Fig. 4E

Fig. 4C

Fig. 4D

Fig. 3

Fig. 6

European Patent
Office

**EUROPEAN SEARCH REPORT**

0093937

Application number

EP 83 10 4042

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | BE-A- 550 651 (TASSET) <br> * Whole document * | 1,5 | F 16 D 3/84 |
| X | DE-A- 706 519 (MAUS) <br> * Whole document * | 1,5 | |
| X | US-A-2 226 388 (RICHTER) <br> * Whole document * | 1,5 | |
| A | DE-A-1 775 265 (MÜNDENER GUMMIWERK) <br> * Page 7, line 13 - page 8, line 1; page 12, lines 11-23; figure 3 * | 1,5,6 | |
| A | FR-A-2 414 145 (CITROEN) <br> * Page 2, line 29 - page 3, line 3; figure 1 * | 1,5,7 | TECHNICAL FIELDS SEARCHED (Int. Cl. ³) |
| A | FR-A-2 356 062 (CAM GEARS) <br> * Page 1, lines 31-33 * | 2 | F 16 D <br> F 16 C <br> F 16 J |
| A,D | US-A-4 224 808 (GEHRKE) | | |
| A,D | US-A-2 210 847 (BERMAN) | | |
| A,D | US-A-2 227 687 (WOLLNER) | | |
|  | ---  -/- | | |

The present search report has been drawn up for all claims

| Place of search <br> THE HAGUE | Date of completion of the search <br> 02-08-1983 | Examiner <br> BARON C. |
|---|---|---|

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A,D | US-A-2 411 874 (GOLDEN) | | |
| | --- | | |
| A,D | US-A-3 660 213 (MOSELEY) | | |
| | --- | | |
| A | FR-A-2 342 630 (WALTERSCHEID) | | |
| | --- | | |
| A,D | US-A-4 222 805 (KARKLINS) | | |
| | ----- | | |

TECHNICAL FIELDS
SEARCHED (Int. Cl. ³)

The present search report has been drawn up for all claims

| Place of search THE HAGUE | Date of completion of the search 02-08-1983 | Examiner BARON C. |
|---|---|---|

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO Form 1503. 03.82